Europäisches Patentamt

European Patent Office

Office européen des brevets

(11) Veröffentlichungsnummer: **0 224 818**
**B1**

# (12) EUROPÄISCHE PATENTSCHRIFT

(45) Veröffentlichungstag der Patentschrift:
06.06.90

(21) Anmeldenummer: 86116171.9

(22) Anmeldetag: 21.11.86

(51) Int. Cl.⁵: **H04Q 11/04**, H04L 12/54,
G06F 15/16

(54) Schaltungsanordnung für Fernmeldeanlagen, insbesondere Fernsprechvermittlungsanlagen, mit Nachrichtenpaketvermittlung von und zu Nachrichtenverarbeitungseinrichtungen über Nachrichtenkanäle.

(30) Priorität: 02.12.85 DE 3542568

(43) Veröffentlichungstag der Anmeldung:
10.06.87 Patentblatt 87/24

(45) Bekanntmachung des Hinweises auf die Patenterteilung:
06.06.90 Patentblatt 90/23

(84) Benannte Vertragsstaaten:
AT BE CH DE FR GB IT LI NL SE

(56) Entgegenhaltungen:
US-A- 4 466 060

UNTERRICHTSBLÄTTERN DER DEUTSCHEN BUNDESPOST, Band 37, Nr. 2, 1984, Seiten 27-70, Hamburg, DE; ROSENBROCK et al.: "Das CCITT-Zeichengabesystem Nr. 7 - Eine Einführung"
INTERNATIONAL SWITCHING SYMPOSIUM, Mai 1984, "Session" 31B, "Paper" 4, Seiten 1-7, Florence, IT; STOLL et al.: "Realization of signaling system no. 7 in an ISDN"
DATA COMMUNICATIONS, Band 13, Nr. 5, Mai 1984, Seiten 231-248 New York, US; HSIEH et al.: "How good is your network routing protocol ?"
THE POST OFFICE ELECTRICAL ENGINEERS' JOURNAL, Band 73, Nr. 3, Oktober 1980, Seiten 165-170, London, GB; PRICHARD: "System X: Subsystems -

(73) Patentinhaber: Siemens Aktiengesellschaft, Wittelsbacherplatz 2, D-8000 München 2(DE)

(72) Erfinder: Pusch, Hildegard, Alfred-Kubin-Weg 18, D-8000 München 71(DE)

(56) Entgegenhaltungen: (Fortsetzung)
Part 4 - Common-channel signalling and the message transmission subsystem"
INTERNATIONAL SWITCHING SYMPOSIUM, Mai 1984, "Session" 14B, "Paper" 4, Seiten 1-6, Florence, IT; KARSAS et al.: "GTD-5C. A system for local and transit applications: evolution from a basic architecture"
NATIONAL TELECOMMUNICATIONS CONFERENCE, November/Dezember 1981, "Paper" A6.3, Seiten 1-5, New Orleans, US; DEN OTTER et al.: "DMS-100 system stability and maintainability under heavy traffic"
INTERNATIONAL SWITCHING SYMPOSIUM, September 1981, "Session" 23B, "Paper" 2, Seiten 1-8, Montreal, CA; BEHAGUE et al.: "CCITT no. 7 common channel signaling and the E10 and E12 digital switching systems"
IEEE GLOBAL TELECOMMUNICATIONS CONFERENCE, November/Dezember 1982, Band 2, "Paper" D1.4, Seiten 1-5, Miami, US; PUNTALORO et al.: "Implementation of the common channel signalling system no. 7 in the AFDT1 nodal exchanges of the SDN Italian network" 000

## Beschreibung

Die Erfindung bezieht sich auf eine Schaltungsanordnung für Fernmeldeanlagen, insbesondere Fernsprechvermittlungsanlagen, mit Nachrichtenpaketvermittlung von und zu einer von einer Mehrzahl von Nachrichtenverarbeitungseinrichtungen über Nachrichtenkanäle, über die von jener stammende bzw. jener zuzuführende und jeweils mit einer individuellen Zieladresse versehene Nachrichtenpakete übertragen werden, und mit einem die Übertragungsvorgänge abwickelnden Übertragungsprozessor, der die Nachrichtenpakete anhand ihrer jeweiligen Zieladresse zu und von den Nachrichtenkanälen und anhand von in ihm gespeicherten und auf eine gegebene Nachrichtenkanäle-Netzkonfiguration bezogenen, sowie Leitwegregeln umfassenden Leitwegdaten weiterleitet, und der für eine insbesondere störungsbedingte und/oder entstörungsbedingte Änderung bezüglich der tatsächlichen und/oder nutzungsbezogen effektiven Netzkonfiguration bzw. für eine Änderung von Leitwegregeln ein Änderungsanforderungssignal erhält und für die von einer solcherartigen Änderung bzw. von solcherartigen Änderungen betroffenen Nachrichtenkanäle nach Maßgabe eines gespeicherten Änderungs-Schemas entsprechende Befehle abgibt.

Prinzip und Verfahren von Paketvermittlung beschreiben u.a. die Zeitschriften "Elektronische Rechenanlagen", 20. Jahrgang (1978), Heft 6, Seiten 289 und 290, und "Nachrichten technische Zeitschrift", Band 32 (1979), Heft 3, Seiten 159 bis 164, sowie die darin angezogene Literatur. Zunächst ist ganz allgemein festzustellen, daß es Datennetze gibt, die eigens zum Betreiben von Paketvermittlung erstellt sind, vergleiche "Der Fernmelde-Ingenieur", 35. Jahrgang (1981) dieser Zeitschrift, Heft 5. In den "Unterrichtsblättern der Deutschen Bundespost", Jahrgang 37 (1984) ist auf den Seiten 27 bis 70 das CCITT-Zeichengabesystem Nr. 7 beschrieben. In diesem Fall dient die Zeichengabe zur Signalisierung von Steuerinformationen im Zusammenhang mit der Herstellung von Verbindungen, zum Beispiel Fernsprechverbindungen, Fernschreibverbindungen und dergleichen. Verbindungen werden bekanntlich jeweils von Teilnehmerstelle (Endeinrichtung) zu Teilnehmerstelle hergestellt und durchgeschaltet. Bei einer Herstellung von Verbindungen, die zu einem Teil über Zwischenvermittlungsstellen und über Kanäle eines Vermittlungsnetzes führen, zum Beispiel über Fernvermittlungsstellen und Kanäle eines Fernvermittlungsnetzes, dienen die mittels dieses Zeichengabesystems Nr. 7 übertragenen Steuerinformationen nur für die Herstellung, Aufrechterhaltung und für die Auslösung des über die betreffenden Vermittlungsstellen verlaufenden Teils jeder dieser Verbindungen, sowie für die Durchführung der Gebührenerfassung und einer Abwicklung von Verkehrsmeß- und -überwachungsvorgängen. Dieses Zeichengabesystem dient also einer Abwicklung (im wesentlichen der Steuerung) des die jeweils beteiligten Vermittlungsstellen betreffenden Vermittlungsbetriebes für individuelle Verbindungen zwischen Teilnehmerstellen, die in individuelle Sprech-, Fernschreib-, Daten- und/oder Videoverbindung und/oder dergleichen treten. Paketvermittlung kann also in einem Fernmeldenetz unmittelbar den Hauptzweck darstellen, sowie aber auch eine vermittelungstechnische Hilfsfunktion im Sinne des angesprochenen Zeichengabesystems Nr. 7 erfüllen.

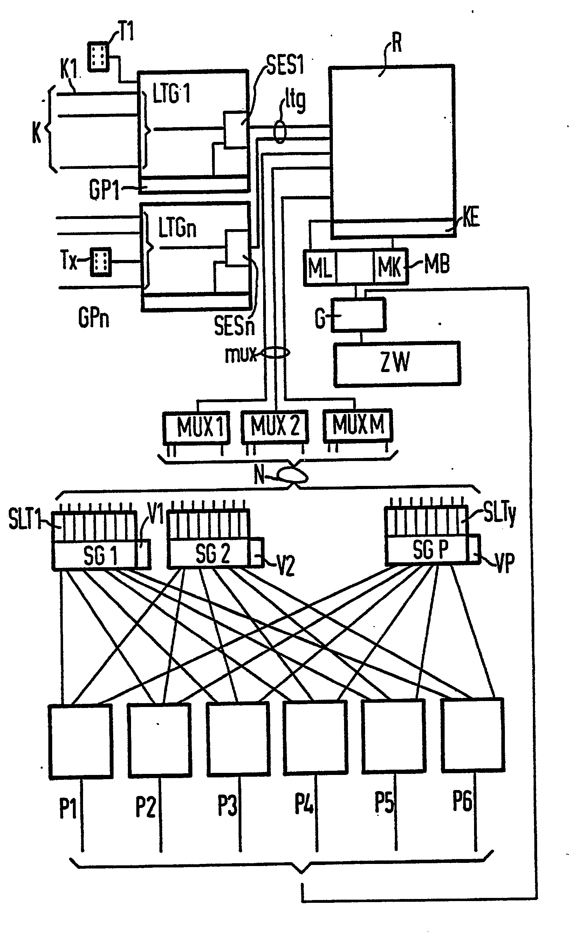

Eine Schaltungsanordnung der eingangs angegebenen Art ist durch die genannte Literaturstelle "Unterrichtsblätter... " bereits bekannt. Nachrichtenverarbeitungseinrichtungen, wie sie eingangs erwähnt sind, sind darin in Bild 11 mit "Anwenderteile" bezeichnet. Der eingangs erwähnte Übertragungsprozessor vereinigt in sich "Funktionen des Zeichengabenetzes". Die eingangs erwähnten Nachrichtenkanäle können gruppenweise zusammengefaßt sein wie es in der zuvor zuletzt genannten Zeitschrift (vgl. Bild 11) dargestellt ist, wo diese Funktionen in den Ebenen 1 und 2 angegeben und erläutert sind. Bei dem in dieser Zeitschrift beschriebenen Zeichengabesystem ist in der eingangs genannten Zieladresse, die jeweils einem Nachrichtenpaket zugefügt ist, die Sprechkreisadresse (siehe Seite 30) enthalten. Auf Seite 50 ff ist mehr detailliert bezüglich dieser Zieladresse beschrieben ("Adresse" in Bild 20), daß außer der Sprechkreisadresse auch noch ein Zielpunktcode darin enthalten ist.

Ein Beispiel für im Übertragungsprozessor gespeicherte Leitwegregeln findet sich bei dem in der zuletzt genannten Zeitschrift beschriebenen Zeichengabesystem auf Seite 51 ("Leitweglenkung der Nachrichten"); auf Seite 41 ist unter dem Stichwort "Zeichengabenetz" die Nachrichtenbehandlung einschließlich der Leitweglenkung erläutert und die auf Seite 41 genannte Steuerstelle (Übertragungsprozessor) ist anhand der Bilder 11 bis 14 in Einzelheiten beschrieben. Die in einem Übertragungsprozessor gespeicherten Leitwegdaten und Leitwegregeln sind im "Zeichengabenetz-Management" enthalten. Änderungen dieser Daten und Regeln sind unter diesem Stichwort auf Seite 42 ff erwähnt. In den verschiedenen Übertragungsprozessoren an den verschiedenen Stellen innerhalb des gesamten Zeichengabenetzwerkes ist durch Speicherung entsprechender Änderungs-Schemata festgelegt - und zwar einheitlich für alle Übertragungsprozessoren - wie jeweils zu verfahren ist, wenn Leitwegregeln zu ändern sind. Solche Änderungen können die tatsächliche Netzkonfiguration betreffen, das heißt auf einem Hinzukommen von Nachrichtenkanälen bzw. -strecken oder auf einem Wegfall derselben beruhen oder sie können die Netzkonfiguration "nutzungsbezogen effektiv" betreffen, das heißt, einer jeweiligen Änderung ist nicht das Zeichengabenetzwerk, sondern nur die Inanspruchnahme seiner Bestandteile durch entsprechend geänderte Leitwegregeln unterzogen.

Ein Übertragungsprozessor muß für die Vornahme einer Änderung bezüglich der Netzkonfiguration bzw. für die Vornahme einer Änderung der Leitwegregeln von irgendwoher eine Information erhalten, die eine solche Änderung letztlich erforderlich macht. Diese Information kann in einem einen Kanal oder eine Strecke betreffenden Ausfallsignal bestehen, das über einen Kanal empfangen wird oder von einer entsprechenden Kanalabschlußeinrichtung abgegeben wird. Diese Information kann aber auch in einem in einem empfangenen Nachrichtenpaket erkannten Übertragungsfehler bestehen, wobei diese Erkennung in dem Übertragungsprozessor selbst stattgefunden haben kann. Diese in irgendeiner Weise einem Übertragungsprozessor zuteil gewordene Information, die eine solche Änderung notwendig macht, wurde eingangs mit dem Wort "Änderungsanforderungssignal" im allumfassenden Sinne umschrieben. Die durch die zuletzt oben genannte Zeitschrift bekannten diesbezüglichen Zusammenhänge beschreibt diese Zeitschrift auf Seite 39 ff. Hat ein Übertragungsprozessor eine Information dieser Art erhalten, so gibt er daraufhin der jeweils betreffenden Änderung entsprechende Befehle ab. In der weiter oben genannten und zuletzt erwähnten Zeitschrift ist hierüber auf Seite 49 beschrieben, wie bei störungsbedingter Ausserbetriebnahme einer Strecke bzw. eines Kanals (diese Vorgänge subsumiert der eingangs gebrauchte Begriff "Änderung") durch einen Übertragungsprozessor dieser die anderen hiervon mitbetroffenen Übertragungsprozessoren darüber unterrichtet, und wie die bereits in einem Sendespeicher einer defekt gewordenen Strecke oder eines defekt gewordenen Kanals gespeicherten Nachrichtenpakete zurückgeholt und entsprechend umdirigiert werden, wobei die Beibehaltung der richtigen Reihenfolge derselben von besonderer Bedeutung ist, was mit dem Hinweis auf das Beispiel, daß es sich um auf diese Weise zu übertragende Wahlinformationen für eine Verbindungsherstellung handelt, sehr einleuchtet.

Für Prozessoren ist allgemein der Ersatzschaltebetrieb ("stand by") bekannt. Es ist bekannt, sie hierzu jeweils zweifach vorzusehen, wobei immer einer zurzeit arbeitet und der andere entweder ruht oder - aktiv unbeteiligt - mitarbeitet, wobei der andere zur Überwachung der Richtigkeit der Arbeitsergebnisse des ersten ausgenutzt werden kann. Der Ersatzschaltebetrieb dient in bekannter Weise einer Erhöhung der Funktionssicherheit. Er ist auch für Übertragungsprozessoren der hier behandelten Art anwendbar.

Für die Erfindung besteht das Problem, daß bekannte Übertragungsprozessoren hinsichtlich ihrer Leistungsfähigkeit im praktischen Betrieb an Grenzen stoßen, wenn die Zahl der betriebenen Nachrichtenkanäle bzw. Strecken- und/oder die Menge der über sie zu übertragenden Nachrichten entsprehend groß wird. Für die Erfindung besteht deshalb die Aufgabe, in einer Schaltungsanordnung mit Übertragungsprozessoren der eingangs angegebenen Art eine höhere Leistungsfähigkeit eines entsprechenden Zeichengabenetzwerkes nutzbar zu machen, wobei eine besondere Bedeutung dem Umstand zukommt, daß gegebene Übertragungsprozessoren mit bestehender begrenzter Leistungsfähigkeit verwendbar sein sollen.

Die Erfindung löst die gestellte Aufgabe dadurch, daß der Übertragungsprozessor für Parallelbetrieb mehrfach vorgesehen ist, daß also wenigstens zwei Übertragungsprozessoren parallel arbeiten, daß sie unabhängig voneinander ihre Übertragungsprozeduren zwischen den Nachrichtenkanälen einerseits und der betreffenden Nachrichtenverarbeitungseinrichtung andererseits abwickeln, und daß bei einer anstehenden Änderung ein Änderungs-Anforderungssignal an alle Übertragungsprozessoren ergeht, daß diese alle die entsprechenden Befehle für den betroffenen Nachrichtenkanal bzw. die betroffenen Nachrichtenkanäle erzeugen und abgeben und daß eine einen der Übertragungsprozessoren bezeichnende Markierung, die bei den Nachrichtenkanälen gespeichert oder an anderer Stelle gespeichert und zu den nachrichtenkanälen übertragen wird, diese Nachrichtenkanäle veranlaßt, von den der jeweiligen Änderung entspechenden und von allen Übertragungsprozessoren unabhängig voneinander erarbeiteten und abgegebenen Befehlen diejenigen nur des durch die Markierung bezeichneten Übertragungsprozessors auszuführen, die der übrigen Übertragungsprozessoren aber zu ignorieren oder zurückzuweisen.

Die Erfindung ermöglicht also in vorteilhafter Weise den Parallelbetrieb der Übertragungsprozessoren, indem hinsichtlich der in der Änderungssituation von ihnen abgegebene Befehle hierbei nicht dadurch durcheinandergeraten, daß - obschon die verschiedenen parallel arbeitenden Übertragungsprozessoren sämtlich Befehle abgeben - die diese Befehle empfangenden Nachrichtenkanäle bzw. Strecken (bzw. Abschlußschaltungen hiervon) nur von einem dieser Übertragungsprozessoren annehmen, bzw. ausführen, die der anderen Übertragungsprozessoren aber ignorieren oder zurückweisen, wozu die erwähnte Markierung gespeichert ist. Dadurch wird in vorteilhafter Weise ein Parallelbetrieb von mehreren Übertragungsprozessoren ermöglicht, ohne daß ein ein Durcheinandergeraten der Befehle an den Kanälen oder Strecken (bzw. den Abschlußschaltungen hiervon) verhindernder Informationsaustausch unter den Übertragungsprozessoren eigens hierzu eingeführt werden müßte. Der einer Leistungssteigerung hinsichtlich der Nachrichtenübertragungsleistung dienende Parallelbetrieb wird also mit unabhängig voneinander parallel arbeitenden Übertragungsprozessoren bekannter Art realisiert, was mit einem äußerst geringfügigen Aufwand für die genannte Markierung bewerkstelligt wird.

In der Zeichnung ist ein Ausführungsbeispiel der Erfindung nur in wesentlich zu ihrem Verständnis beitragenden Bestandteilen dargetellt, worauf sie jedoch keineswegs beschränkt ist.

Im oberen Teil der Zeichnung ist eine zentral gesteuerte Zeitmultiplex-Fernsprechvermittlungsanlage dargestellt, wie sie zum Beispiel in der deutschen Offenlegungsschrift P 3 128 365 gezeigt und beschrieben ist. An ein zentrales Koppelfeld R sind über Zeitmultiplexleitungen ltg Anschlußgruppen LTG1 bis LTGn angeschlossen. An diese wiederum sind Verbindungsleitungen und Teilnehmeranschlußleitungen angeschlossen. Die Teilnehmeranschlußleitungen führen zu Teilnehmerstellen T1 bis Tx. Verbindungsleitungen können als Analog-Leitungen ausgebildet sein, sie können aber auch als Kanäle von Zeitmultiplexleitungen realisiert sein. Diese Verbindungsleitungen sind in der Zeichnung zusammenfassend mit "K" bezeichnet, und zwar bei der Anschlußgruppe LTG1; entsprechendes gilt für die Anschlußgruppe LTGn.

Jede der Anschlußgruppen LTG1 bis LTGn ist mit einem Gruppenprozessor GP1 bis GPn ausgestattet. Jeder der Gruppenprozessoren steht über eine Datenverbindung mit einem zentralen Prozessor ZW in Verbindung. Diese Datenverbindungen pro Gruppenprozessor sind ebenso wie andere Verbindungen über das zentrale Koppelfeld R durchgeschaltet. Einzelheiten hierüber sind in der deutschen Offenlegungsschrift 3 106 903 dargestellt und beschrieben.

Die im oberen Teil der Zeichnung auszugsweise dargestellte Zeitmultiplex-Fernsprechvermittlungsanlage steht in bekannter Weise mit anderen Zeitmultiplex-Fernsprechvermittlungsanlagen in Verbindung. Dies betrifft sowohl Fernsprechvermittlungsanlagen innerhalb ein- und desselben Ortes als auch Fernsprechvermittlungsanlagen in entfernt gelegenen Orten. Demgemäß werden Fernsprechortsverbindungen sowie Fernsprechfernverbindungen hergestellt.

Wie nun in der bereits oben genannten Zeitschrift "Unterrichtsblätter ..." erläutert ist, erfolgt alle Signalisierung für individuelle Verbindungen, die von den angeschlossenen Teilnehmern gewählt werden, über zentrale Zeichenkanäle. Die für die Herstellung, Aufrechterhaltung und Auslösung von Verbindungen, sowie für die Gebührenerfassung verbindungsindividuell zu übertragenden Schaltkennzeichen werden also im Gegensatz zur konventionellen Fernsprechvermittlungstechnik nicht mit über den aufgebauten Verbindungsweg übertragen, sondern über zentrale Zeichenkanäle, die die verschiedenen Fernsprechvermittlungssysteme untereinander verbinden. Das Prinzip einer solchen Zentralkanalzeichengabe ist in der oben bereits genannten Zeitschrift "Unterrichtsblätter ..." bereits ausführlich erläutert.

Es sei nun angenommen, daß von der Teilnehmerstelle Tx über das zentrale Koppelfeld R und über einen Kanal K1 eine Verbindung hergestellt werde, die zu einer fernen Fernsprechvermittlungsstelle verläuft und dort weiter durchgeschaltet wird, bis zu einer fernen anderen Teilnehmerstelle. Diese Verbindung wird also über die Anschlußgruppen LTGn und LTG1 aufgebaut. Hierbei sind die Gruppenprozessoren GPn und GP1 mit beteiligt. Die in diesem Zusammenhang verbindungsindividuell zu übertragenden Schaltkennzeichen werden nicht über den für diese Verbindungsherstellung benutzten Kanal K1 übertragen, sondern über einen zentralen Zeichenkanal. Hierzu werden die betreffenden verbindungsindividuellen Schaltkennzeichen vom Gruppenprozessor GP1 (oder bereits vom Gruppenprozessor GPn) nicht nur in der in den obengenannten Offenlegungsschriften beschriebenen Weise zum zentralen Prozessor ZW übertragen sondern auch von einem oder beiden der Gruppenprozessoren direkt zu einer Eingabe-Ausgabe-Steuereinrichtung G weitergeleitet. Diese dient also nicht nur dem in der bereits genannten DE-OS 3 128 365 beschriebenen Zweck, sondern u.a. auch zur Weiterleitung - und zwar in abgehender Richtung sowie in ankommender Richtung - jeglicher verbindungsindividueller Schaltkennzeichen, die für abgehende sowie für ankommende Verbindungen über zentrale Zeichengabekanäle zu übertragen sind, das heißt auszusenden bzw. zu empfangen sind. Diese Einrichtung ist im übrigen in der zuvor genannten Offenlegungsschrift ausführlich beschrieben und dort mit "Eingabe-/Ausgabe-Speicher und Eingabe-/Ausgabe-Steuereinrichtung" bezeichnet. Sie kann auf die Funktionen gemäß dieser Offenlegungsschrift beschränkt sein, kann im erfindungsgemäßen Zusammenhang aber auch weitere und/oder andere Funktionen ausüben. Sie bildet zusammen mit den betreffenden Anschlußgruppen LTG1 bis LTGn eine erfindungsgemäße Nachrichtenverarbeitungseinrichtung, bezüglich deren Funktion auf die zu "Ebene 4" in der Zeitschrift "Unterrichtsblätter ..." angegebenen Funktion hingewiesen wird.

In der in der Zeichnung dargestellten Fernsprechvermittlungsanlage ist also unter anderem die Eingabe-/Ausgabe-Steuereinrichtung G vorgesehen. Sie dient in bekannter, beschriebener Weise zur Eingabe von Informationen von den Gruppenprozessoren in den Koordinationsprozessor ZW (zentraler Prozessor) sowie zur Ausgabe von Informationen in umgekehrter Richtung, sowie zur Weiterleitung von Informationen von einem Gruppenprozessor zu einem anderen unter Umgehung des Koordinationsprozessors. In dem erläuterten Zusammenhang der Herstellung, Aufrechterhaltung und Auslösung individueller Fernsprechverbindungen mit Zentralkanalzeichengabe dient diese Eingabe-Ausgabe-Steuereinrichtung außerdem und in ähnlicher Weise zur Weiterleitung von verbindungsindividuellen Schaltkennzeichen zwecks deren Übertragung über zentrale Zeichengabekanäle. Diese zentralen Zeichengabekanäle sind in der Zeichnung zusammenfassend mit "N" bezeichnet. Diese zentralen Nachrichtenkanäle sind über Multiplexer/Demultiplexer MUX1 bis MUXM und über Zeitmultiplexleitungen je an das Koppelfeld R zeitmultiplextechnisch angeschlossen. Diese zentralen Nachrichtenkanäle N sind über die Anschlußgruppen LTG1 bis LTGn mit für die Zentralkanalzeichengabe dauernd belegten Kanälen verbunden. Die der Zentralkanalzeichengabe dienenden Kanäle bilden ein Netz von Standverbindungen, also von Verbindungen, die beständig durchgeschaltet bleiben. Diese Kanäle sind in der bekannten Weise zeitmultiplextechnisch durchgeschaltet, und zwar über die Anschlußgruppen, über das Koppelfeld und über die Multiplexer/Demultiplexer. Diese der Zentralkanalzeichengabe dienenden Kanäle N dienen in bekannter Weise zur Übertragung in beiden Übertragungsrichtungen. Jeweils acht dieser der Zentralkanalzeichengabe dienenden Kanäle N sind zusammengefaßt. Pro Nachrichtenkanal ist eine Kanalabschlußschaltung SLT1 bis SLTy vorgesehen. Jeweils acht solche Kanalabschlußschaltungen sind zusammengefaßt und werden mittels einer gemeinsamen Kanalsteuereinrichtung SG1 bis SGP gesteuert.

Wie der oben bereits genannten Zeitschrift "Unterrichtsblätter ..." auf Seite 39 aus Bild 11 zu entnehmen ist, sind die der Zentralkanalzeichengabe dienenden Einrichtungen so aufgeteilt, daß sie sich in verschiedenen Ebenen darstellen lassen. Die Kanalabschlußschaltungen SLT1 bis SLTy entsprechen den in Bild 11 auf Seite 39 dargestellten Zeichenkanälen in Ebene 2, während die Zeichenkanäle von Ebene 1 von MUX1 bis MUXM über das Koppelnetz R und die Anschlußschaltungen LTG1 bis LTGn duchgeschaltet sind und über Kanäle, zum Beispiel K1. Die Kanalsteuereinrichtungen SG1 bis SGP in der Zeichnung entsprechen der zwischen den Ebenen 2 und 3 in Bild 11 auf Seite 39 dargestellten Zusammenfassung. Den in Bild 11 auf Seite 39 dargestellten Einrichtungen der Ebene 3 entsprechen die in der Zeichnung dargestellten Übertragungsprozessoren P1 bis P6. Hierbei ist aber zu beachten, daß im Gegensatz zu der Darstellung in der Zeitschrift "Unterrichtsblätter ... " die in der Zeichnung dargestellten Übertragungsprozessoren mehrfach vorgesehen sind. Die in der Zeichnung dargestellte Eingabe-Ausgabe-Steuereinrichtung G entspricht zusammen mit den betreffenden Anschlußgruppen LTG1 is LTGn jeweils einer der Einrichtungen, die in Bild 11 auf Seite 39 in Ebene 4 dargestellt sind.

In dem hier behandelten Zusammenhang ist auch auf die Bilder 12 bis 14 sowie auf Bild 21 auf Seite 51 der genannten Zeitschrift "Unterrichtsblätter ...", sowie auf die zugehörige Beschreibung zu verweisen. Hier wird die genannte Zusammenarbeit zwischen den Einrichtungen G gemäß Ebene 4 und den Nachrichtenkanälen (Ebene 1 bzw. Ebenen 1 und 2) mit Hilfe eines Übertragungsprozessors (Ebene 3) detailliert beschrieben. Diese Beschreibung trifft auch für die in der Zeichnung gegebene Anordnung zu, wobei die Entsprechungen zuvor im einzelnen angegeben worden sind.

Bei dem vorliegenden Beschreibungsbeispiel handelt es sich also um eine Fernsprechvermittlungsanlage, bei der das Prinzip der Nachrichtenpaketvermittlung in Zusammenhang mit der Zentralkanalzeichengabe angewendet ist. Diese Zentralkanalzeichengabe erfolgt von und zu der Nachrichtenverarbeitungseinrichtung, die also jeweils die Eingabe-Ausgabe-Steuereinrichtung G sowie die ihr entsprechenden Anschlußgruppen LTG1 bis LTGn einschließlich deren Gruppenprozessoren umfaßt, über die Nachrichtenkanäle N. Über diese Nachrichtenkanäle werden die von diesen Anschlußgruppen stammenden bzw. die ihnen zuzuführenden Nachrichtenpakete übertragen, wobei jedes derselben mit einer individuellen Zieladresse in an sich bekannter Weise versehen ist. Jeder dieser Übertragungsvorgänge wird mit Hilfe eines Übertragungsprozessors, zum Beispiel P1 abgewickelt, der die Nachrichtenpakete, die zur Abwicklung der Zentralkanalzeichengabe abgehend bzw. ankommend zu übertragen sind, anhand ihrer jeweiligen Zieladresse zu und von den Nachrichtenkanälen (über MUX1 bis MUXM) und anhand von Leitwegdaten weiterleitet, die jeweils in ihm gespeichert sind und auf eine gegebene Nachrichtenkanäle-Netzkonfiguration bezogen sind. Alle Einzelheiten hierüber können der bereits genannten Zeitschrift "Unterrichtsblätter ..." entnommen werden. Die die genannten Leitwegregeln umfassenden Leitwegdaten, die in jedem der Übertragungsprozessoren gespeichert sind, geben für jede irgend zu übertragende Nachricht einen jeweiligen Weg an, über den sie zu übertragen ist.

Ebenso, wie für jede Verkehrsbeziehung innerhalb des der Zentralkanalzeichengabe dienenden Gesamtnetzes von Zeichengabekanälen innerhalb jedes Übertragungsprozessors mittels der die Leitwegregeln umfassenden gespeicherten Leitwegdaten festgelegt ist, auf welchem Wege eine jede der im Sinne der Zentralkanalzeichengabe zu übertragenden Nachrichten zu übertragen ist, ist auch für den Fall eines Eintretens von Störungen festgelegt, welcher jeweils andere Weg dann für die Übertragung der betreffenden Nachricht zu benutzen ist. Fällt also irgendeiner der Nachrichtenkanäle aus, was zum Beispiel dadurch verursacht sein kann, daß übertragene Nachrichten wiederholt fehlerhaft übertragen worden sind, weswegen der betreffende Kanal außer Betrieb genommen werden muß, so ist durch die in den Übertragungsprozessoren vorhandene Speicherung von Leitwegdaten festgelegt, welcher Ersatzweg dann zu benutzen ist. Das Netz der Nachrichtenkanäle ist so reichlich ausgelegt, daß bei Ausfall eines oder mehrerer Nachrichtenkanäle immer genügend Ersatzwege vorhanden sind. Dies kann dadurch bewerkstelligt sein, daß im Normalfall sämtliche Nachrichtenkanäle nur relativ schwach ausgelastet sind, und daß bei Ausfall eines Nachrichtenkanales die betreffende Verkehrslast auf andere noch im störungsfreien Betrieb befindliche Nachrichtenkanäle umgelegt wird. Es kann auch vorgesehen sein, daß für den angesprochenen Fall Nachrichtenkanäle, die im Normalzustand völlig unbenutzt sind, erst in Benutzung genommen werden.

Die genannten, in den Übertragungsprozessoren gespeicherten Leitwegdaten sind also auf eine Nachrichtenkanäle-Netzkonfiguration bezogen und umfassen Leitwegregeln, gemäß denen im Sinne der Zentralkanalzeichengabe zu übertragende Nachrichten je nach gegebener Verkehrsbeziehung bestimmten der Nachrichtenkanäle N zugeführt werden. Infolge von Störungen sowie infolge einer Behebung von Störungen ergeben sich Änderungen bezüglich der Netzkonfiguration. Diese Änderungen können die tatsächliche Netzkonfiguration betreffen. Das heißt, daß ein Nachrichtenkanal, der störungsbedingt nicht mehr benutzt werden kann, aus dem Gesamtnetz der Nachrichtenkanäle entfällt z.B. infolge einer Sperrung (Gesperrtmarkierung), bzw. wieder neu hinzukommt (zum Beispiel bei Behebung einer Störung). Eine Änderung bezüglich der Netzkonfiguration kann jedoch auch alleine nutzungsbezogen sein; das heißt, daß ein Kanal, der bereits betriebsbereit vorhanden war und bisher nicht benutzt werden durfte, in Zusammenhang mit der betreffenden Änderung nunmehr in Benutzung genommen werden darf. Dies wäre also eine Änderung bezüglich der nutzungsbezogenen effektiven Netzkonfiguration.

Das Prinzip des Ersatzschaltens von Kanälen kann zum Beispiel davon ausgehen, daß im Normalzustand alle Signalisierungs-Kanäle nur mit 50% Verkehr belastet sind. BeiAusfall eines Kanals kann einem anderen dann eine 100%ige Verkehrslast aufgebürdet werden. Dieser ist dann also bezüglich seiner ersten 50% Verkehrslast wie vor der Ersatzschaltung in Benutzung; seine Ersatzschaltung betrifft die Aufbürdung der weiteren 50% Verkehrsbelastung. Es ist deshalb zweckmäßig, die Signalisierungskanäle paarweise oder in Vierergruppen vorzusehen.

Es können auch die Leitwegregeln an sich geändert werden, ohne daß also eine Störung eingetreten ist, ohne daß also ein Kanal ausgefallen ist. Eine solche Änderung von Leitwegregeln kann dann angezeigt sein, wenn bestimmte Kanäle beständig überlastet sind und wenn mit Hilfe der Leitweglenkung die Verkehrsbelastung innerhalb des gesamten der Zentralkanalzeichengabe dienenden Netzes anders verteilt werden muß. Eine Änderung von Leitwegregeln kann in Zusammenhang damit stehen, daß bei Ausfall von Signalisierungskanälen oder entsprechenden Strecken Umwege vorgesehen werden.

Immer wenn die durch Speicherung der Leitwegdaten gegebenen Leitwegregeln in einem Übertragungsprozessor geändert werden müssen, wird dies dem Übertragungsprozessor mitgeteilt. Fällt ein Nachrichtenkanal aus, so wird diese Tatsache jedem der Übertragungsprozessoren mitgeteilt. In diesem Fall besteht ein Änderungsanforderungssignal in einer dieser Tatsache gemäßen Mitteilung. Entsprechendes gilt umgekehrt, wenn ein vorübergehend gesperrt gewesener Nachrichtenkanal erneut wieder in Betrieb genommen wird. Änderungsanforderungssignale können auch darin bestehen, daß ein Übertragungsprozessor eine Nachricht erhält, die fehlerhaft ist, und deren Fehlerhaftigkeit er selbst erkennt. In diesem Falle liegt das Änderungsanforderungssignal also in der Fehlerhaftigkeit einer empfangenen Nachricht. Ein Änderungsanforderungssignal kann auch von einer Kanalsteuereinrichtung, zum Beispiel SG1, gebildet und an die Übertragungsprozessoren P1 bis P6 abgegeben werden, wenn von der betreffenden Kanalsteuereinrichtung die Fehlerhaftigkeit einer übertragenen Nachricht erkannt wird.

Erhält ein Übertragungsprozessor ein Änderungsanforderungssignal, so nimmt er nicht nur die interne Änderung der die Leitwegregeln umfassenden Leitwegdaten vor, sondern er gibt auch für die von einer solcherartigen Änderung betroffenen Nachrichtenkanäle nach Maßgabe eines gespeicherten Änderungs-Schemas entsprechende Befehle ab. So kann zum Beispiel von einem Übertragungsprozessor der Befehl abgegeben werden, daß ein bestimmter Nachrichtenkanal vorläufig nicht mehr benutzt werden darf. Der betreffende Befehl besteht in einem solchen Fall also aus einem Sperrsignal. Demgemäß ist also vorgesehen, daß eine Änderung, insbesondere ein aufgrund eines Änderungsanforderungssignales abgegebener Befehl, eine Inbenutzungnahme und/oder Außerbenutzungnahme von Nachrichtenkanälen bewirkt, insbesondere eine Außerbenutzungnahme eines Kanals und eine Inbenutzungnahme eines anderen Nachrichtenkanals anstelle des außer Benutzung genommenen Nachrichtenkanals. Der betreffende Befehl kann also außer einer Außerbenutzungnahme ·eines Nachrichtenkanals auch die Inbenutzungnahme eines anderen Nachrichtenkanals bewirken oder auch beides. Ferner kann auch vorgesehen werden, daß die Inbenutzungnahme eines Nachrichtenkanals darin besteht, daß einem bereits benutzten Nachrichtenkanal die Verkehrsbelastung (Paketvermittlungsaufträge) eines weiteren, außer Benutzung genommenen Nachrichtenkanals zusätzlich zugeführt wird.

Darüber hinaus können auch Befehle für einen in den Sperrzustand übergegangenen Kanal abgegeben werden, für den noch eine Anzahl von Nachrichten gespeichert ist, die über den betreffenden Nachrichtenkanal ausgesendet werden sollten. Wie in Zusammenhang mit Bild 13 in der genannten Zeitschrift "Unterrichtsblätter ... " dort beschrieben ist, ist es erforderlich, daß eine Reihe von Nachrichten, die über einen Nachrichtenkanal in einer bestimmten Reihenfolge übertragen werden sollten, bei einer störungsbedingten Umleitung über einen anderen Nachrichtenkanal nach wie vor in der gleichen Reihenfolge übertragen werden müssen. Dies ist sehr plausibel im Blick auf das Beispiel, daß mit Hilfe der Nachrichten die Ziffern einer zusammenhängenden Wahlinformation übertragen werden sollen. In diesem Falle dürfte die Reihenfolge dieser Ziffern in Zusammenhang mit der Umleitung der Nachrichten über andere Nachrichtenkanäle auf keinen Fall geändert werden. Demgemäß ist also auch bei dem hier beschriebenen Ausführungsbeispiel vorgesehen, daß ein für oder an einen Nachrichtenkanal abgegebener Befehl bewirkt, daß für oder bei diesem Nachrichtenkanal, zum Beispiel in einer Kanalabschlußschaltung gespeicherte Nachrichten abgerufen und in ihrer ursprünglichen Übertragungsreihenfolge einem anderen Nachrichtenkanal zugeführt werden. Geht es also darum, für einen Nachrichtenkanal bereits in bestimmter Reihenfolge gespeicherte Nachrichten umzudirigieren, so wird dies mit Hilfe von Befehlen bewerkstelligt, die vom Übertragungsprozessor in dem angesprochenen Betriebsfall abgegeben und von der betreffenden Kanalsteuereinrichtung, z.B. SG1, abgewickelt werden.

Wie aus der Zeichnung ersichtlich ist, und wie bereits erläutert wurde, sind - abgesehen vom bekannten Ersatzschalteprinzip - mehrere Übertragungsprozessoren P1 bis P5 für einen unabhängigen Parallelbetrieb vorgesehen. Der Übertragungsprozesor P6 möge zusätzlich, und zwar zur Ersatzschaltung im Störungsfall, vorgesehen sein. Diese Übertragungsprozessoren P1 bis P5 arbeiten also im Parallelbetrieb unabhängig voneinander. Jeder von ihnen steht mit jeder der Kanalsteuereinrichtungen SG1 bis SGP in Verbindung. Unabhängig voneinander wickeln sie ihre Übertragungsprozeduren zwischen den Nachrichtenkanälen einerseits und der Nachrichtenverarbeitungseinrichtung G andererseits ab, die die Nachrichtenpakete an die betreffenden Gruppenprozessoren oder an den Koordinationsprozessor ZW weiterleitet, bzw. in umgekehrter Richtung von diesen Prozessoren stammende Nachrichtenpakete zu den betreffenden Nachrichtenkanälen (N) weiterbefördert. In diesem Zusammenhang sei bemerkt, daß anstelle einer einzigen Eingabe-Ausgabe-Steuereinrichtung G auch mehrere solche voneinander unabhängig vorgesehen sein können, wobei zum Beispiel eine von ihnen der Abwicklung der Zentralkanalzeichengabe dienen kann. Darüber hinaus können auch andere Nachrichtenverarbeitungseinrichtungen einer Nachrichtenpaketvermittlung, d.h. für andere Zwecke, zum Beispiel zur Datenübertragung zwischen Teilnehmern, vorgesehen sein. Es ist möglich, die Übertragungsprozessoren den mehreren unabhängig voneinander vorgesehenen Nachrichtenverarbeitungseinrichtungen einzeln oder gruppenweise zuzuordnen.

Ergeht nun in der beschriebenen Weise bei einer anstehenden Änderung ein Änderungs-Anforderungssignal an alle Übertragungsprozessoren, so reagieren diese, weil sie ja parallel und unabhängig voneinander arbeiten, sämtlich in der gleichen Weise. Sie erzeugen also zeitlich unabhängig voneinander, aber ungefähr gleichzeitig die entsprechenden Befehle für den betroffenen Nachrichtenkanal bzw. die betroffenen Nachrichtenkanäle und geben sie zu den Kanalsteuerungen SG1 bis SGP hin ab. Jede derselben empfängt also die betreffenden Befehle von jedem der Übertragungsprozessoren P1 bis P5. Diese Befehle können zeitgleich sein, können aber (dies wird in der Regel zutreffen) mit zeitlichen Unterschieden in den Kanalsteuerungen SG1 bis SGP eintreffen. Um nun zu verhindern, daß die jeweils in einer Kanalsteuerung eintreffenden Befehle, die von den verschiedenen Übertragungsprozessoren erzeugt und abgegeben werden und in der jeweiligen Kanalsteuerung eintreffen, hier drucheinander kommen, ist in einem jeder Kanalsteuerung beigefügten Speicher V1 bis VP eine Markierung gespeichert, durch die jeweils einer der Übertragungsprozessoren markiert ist. Diese Speicherung erfolgt also bei den Nachrichtenkanälen; sie kann auch an anderer Stelle vorgenommen sein und zu den Nachrichtenkanälen im Bedarfsfall übertragen werden.

Die genannte, jeweils einen der Übertragungsprozessoren bezeichnende Markierung veranlaßt die Nachrichtenkanäle bzw. die sie jeweils zusammenfassenden Kanalsteuereinrichtungen, von den der jeweiligen Änderung entsprechenden und von allen Übertragungsprozessoren unabhängig voneinander erarbeiteten und abgegebenen Befehlen diejenigen nur des durch die Markierung jeweils bezeichneten Übertragungsprozessors auszuführen, die der übrigen Übertragungsprozessoren aber zu ignorieren oder zurückzuweisen. Es findet also ein Parallelbetrieb der Übertragungsprozessoren statt, wobei jdoch hinsichtlich der in der Änderungssituation von ihnen abgegebene Befehle nicht durcheinandergeraten. Obwohl die verschiedenen parallel arbeitenden Übertragungsprozessoren sämtlich Befehle abgeben, und zwar völlig unabhängig voneinander, nehmen Nachrichtenkanäle bzw. Strecken (bzw. Abschlußschaltungen hiervon), bei denen diese Befehle eintreffen, nur von einem dieser Übertragungsprozessoren Befehle an, bzw. führen sie aus, wohingegen sie aber diese Befehle, die von den anderen Übertragungsprozessoren abgegeben werden, ignorieren oder zurückweisen, wozu sie durch die erwähnte gespeicherte Markierung veranlaßt werden. Demgemäß wird in vorteilhafter Weise ein Parallelbetrieb von mehreren Übertragungsprozessoren abgewickelt, ohne daß ein ein Durcheinandergeraten der Befehle an den Kanälen oder Strecken (bzw. den Abschlußschaltungen hiervon) verhindernder Informationsaustausch unter den Übertragungsprozessoren, der also anderenfalls eigens hierzu eingeführt werden müßte, erforderlich ist. Der einer Leistungssteigerung hinsichtlich der Nachrichtenübertragungsleistung dienende Parallelbetrieb wird also mit unabhängig voneinander parallel arbeitenden Übertragungsprozessoren bekannter Art realisiert, was mit einem äußerst geringfügigen Aufwand für die genannte Markierung bewerkstelligt ist.

## Patentansprüche

1. Schaltungsanordnung für Fernmeldeanlagen, insbesondere Fernsprechvermittlungsanlagen, mit Nachrichtenpaketvermittlung von und zu einer von einer Mehrzahl von Nachrichtenverarbeitungseinrichtungen über Nachrichtenkanäle (N), über die von jener stammende bzw. jener zuzuführende und jeweils mit eine individuellen Zieladresse versehene Nachrichtenpakete übertragen werden, und mit einem die Übertragungsvorgänge abwickelnden Übertragungsprozessor, der die Nachrichtenpakete anhand ihrer jeweiligen Zieladresse zu und von den Nachrichtenkanälen und anhand von in ihm gespeicherten und auf eine gegebene Nachrichtenkanäle-Netzkonfiguration bezogenen, sowie Leitwegregeln umfassenden Leitwegdaten weitergeleitet, und der für eine insbesondere störungsbedingte und/oder entstörungsbedingte Änderung bezüglich der tatsächlichen und/oder nutzungsbezogen effektiven Netzkonfiguration bzw. für eine Änderung von Leitwegregeln ein Änderungsanforderungssignal erhält und für die von einer solcherartigen Änderung bzw. von solcherartigen Änderungen betroffenen Nachrichtenkanäle nach Maßgabe eines gespeicherten Änderungs-Schemas entsprechende Befehle abgibt, **dadurch gekennzeichnet**, daß der Übertragungsprozessor für Parallelbetrieb mehrfach vorgesehen ist (P1-P6), daß also wenigstens zwei Übertragungsprozessoren parallel arbeiten, daß sie unabhängig voneinander ihre Übertragungsprozeduren zwischen den Nachrichtenkanälen einerseits und der betreffenden Nachrichtenverarbeitungseinrichtung andererseits abwickeln, und daß bei einer anstehenden Änderung ein Änderungs-Anforderungssignal an alle Übertragungsprozessoren ergeht, daß diese alle die entsprechenden Befehle für den betroffenen Nachrichtenkanal bzw. die betroffenen Nachrichtenkanäle erzeugen und abgeben und daß eine einen der Übertragungsprozessoren bezeichnende Markierung, die bei den Nachrichtenkanälen gespeichert oder (V1-VP) an anderer Stelle gespeichert und zu den Nachrichtenkanälen übertragen wird, diese Nachrichtenkanäle veranlaßt, von den der jeweiligen Änderung entsprechenden und von allen Übertragungsprozessoren unabhängig voneinander erarbeiteten und abgegebenen Befehlen diejenigen nur des durch die Markierung bezeichneten Übertragungsprozessors auszuführen, die der übrigen Übertragungsprozessoren aber zu ignorieren oder zurückzuweisen.

2. Schaltungsanordnung nach Anspruch 1, **dadurch gekennzeichnet**, daß eine Änderung, insbesondere ein aufgrund eines Änderungsanforderungssignales abgegebener Befehl, eine Inbenutzungnahme und/oder Außerbenutzungnahme von Nachrichtenkanälen bewirkt, insbesondere eine Außerbenutzungnahme eines Kanals und eine Inbenutzungnahme eines anderen Nachrichtenkanals anstelle des außer Benutzung genommenen Nachrichtenkanals.

3. Schaltungsanordnung nach Anspruch 2, **dadurch gekennzeichnet**, daß die Inbenutzungnahme eines Nachrichtenkanals darin besteht, daß einem bereits benutzten Nachrichtenkanal die Verkehrsbelastung (Paketvermittlungsaufträge) eines weiteren, außer Benutzung genommenen Nachrichtenkanals zusätzlich zugeführt wird.

4. Schaltungsanordnung nach Anspruch 1, **dadurch gekennzeichnet**, daß ein für oder an einen Nachrichtenkanal abgegebener Befehl bewirkt, daß für oder bei diesem Nachrichtenkanal, zum Beispiel in einer Kanalabschlußschaltung (SLT1, ... SLTy) gespeicherte Nachrichten abgerufen und in ihrer ursprünglichen Übertragungsreihenfolge einem anderen Nachrichtenkanal zugeführt werden.

## Claims

1. Circuit arrangement for telecommunication exchanges, especially telephone exchanges, with packet switching of messages from and to one of a plurality of message processing units via message channels (N), via which packets of messages originating from or to be fed to the said message processing unit and provided in each case with an individual destination address are transmitted, and with a transmission processor, which executes the transmission operations, which passes on the packets of messages on the basis of their respective destination address to and from the message channels and on the basis of routing data stored in it and related to a given message channel network configuration, as well as comprising routing rules, and which receives an amendment request signal for an amendment, in particular due to faults and/or fault suppression, with respect to the actual and/or use-related effective network configuration or for an amendment of routing rules and, according to a stored amendment scheme, issues corresponding commands for the message channels affected by such an amendment or by such amendments, characterized in that the transmission processor is provided in plurality for parallel operation (P1–P6), in that consequently at least two transmission processors operate in parallel, in that they handle their transmission procedures between the message channels on the one hand and the message processing unit concerned on the other hand independently of one another, and in that, when an amendment is to be made, an amendment request signal goes to all of the transmission processors, in that the latter all generate and issue the corresponding commands for the message channel concerned or the message channels concerned and in in that a marking which designates one of the transmission processors, is stored at the message channels (V1–VP) or elsewhere and is transmitted to the message channels, causes the said transmission channels to execute from among the commands corresponding to the respective amendment and devised and issued by all of the transmission processors independently of one another those only of the transmission processor designated by the marking, but to ignore or reject those of the other transmission processors.

2. Circuit arrangement according to Claim 1, characterized in that an amendment, in particular a command issued on the basis of an amendment request signal, has the effect of putting message channels into use and/or taking them out of use, in particular taking one channel out of use and putting another message channel into use in place of the message channel taken out of use.

3. Circuit arrangement according to Claim 2, characterized in that putting a message channel into use consists in additionally feeding to an already used message channel the traffic load (packet switching orders) of another message channel, taken out of use.

4. Circuit arrangement according to Claim 1, characterized in that a command issued for or to a message channel has the effect that messages stored for or at this message channel, for example in a channel termination circuit (SLT1, ... SLTy) are called up and fed in their original transmission sequence to another message channel.

## Revendications

1. Montage pour des installations de télécommunications, notamment des centraux téléphoniques, avec commutation de paquets d'informations en provenance et en direction d'une multiplicité de dispositifs de traitement d'informations, par l'intermédiaire de (N) canaux de transmission d'informations, au moyen desquels sont transmis les paquets d'informations qui proviennent de ou doivent être envoyés à chacun de ces dispositifs et comportent respectivement une adresse individuelle de destination, et comportant un processeur de transmission qui exécute les opérations de transmission et retransmet les paquets d'informations sur la base de leur adresse respective de destination en direction et à partir des canaux de transmission d'informations et sur la base de données d'acheminement mémorisées en lui et rapportées à une configuration donnée du réseau de canaux de transmission d'informations et incluant des règles d'acheminement, et qui, pour une modification conditionnée notamment par une perturbation et/ou un déparasitage en rapport avec la configuration réelle du réseau ou la configuration effective du réseau rapportée à l'utilisation ou pour une modification de règles d'acheminement, reçoit un signal de demande de modification et, pour les canaux de transmission d'informations concernés par une telle modification ou par de telles modifications, délivre des ordres correspondants en fonction d'un schéma mémorisé de modification, caractérisé par le fait que le processeur de transmission est prévu d'une manière multiple (P1–P6) pour un fonctionnement en parallèle, que par conséquent au moins deux processeurs de transmission travaillent en parallèle, qu'ils exécutent, indépendamment l'un de l'autre, leurs procédures de transmission entre les canaux de transmission d'informations d'une part et le dispositif concerné de traitement d'informations, et que, dans le cas de l'apparition d'une modification, un signal de demande de modification est appliqué à tous les processeurs de transmission, que ces derniers produisent et délivrent toutes les instructions correspondantes pour le ou les canaux concernés de transmission d'informations, et qu'un marquage, qui désigne l'un des processeurs de transmission et est mémorisé (V1–VP) dans les canaux de transmission d'informations ou qui est mémorisé en un autre emplacement et qui est envoyé aux canaux de transmission d'informations, amène ces canaux de transmission d'informations à exécuter, parmi les instructions qui correspondent à la modification respective et sont élaborés et délivrés par tous les processeurs de transmission indépendamment les uns des autres, uniquement les instructions du processeur de transmission désigné par le marquage, mais à ignorer ou rejeter les autres processeurs de transmission.

2. Montage suivant la revendication 1, caractérisé par le fait qu'une modification, notamment une instruction délivrée sur la base d'un signal de demande de modification, déclenche une mise en service et/ou une mise hors service de canaux de transmission d'informations, notamment une mise en service d'un canal et une mise hors service d'un autre canal de transmission d'informations à la place du canal de transmission d'informations mis hors service.

3. Montage suivant la revendication 2, caractérisé par le fait que la mise en service d'un canal de transmission d'informations consiste en ce qu'à un canal déjà utilisé de transmission d'informations est envoyée, en supplément, la charge en trafic (ordres de commutation de paquets) d'un autre canal de transmission d'informations, mis hors service.

4. Montage suivant la revendication 1, caractérisé par le fait qu'une instruction délivrée pour ou à un canal de transmission d'informations a pour effet que des informations mémorisées pour ou dans ce canal de transmission d'informations, par exemple dans un circuit de terminaison de canal (SLT1...SLTy), sont appelées et sont envoyées, avec leur séquence initiale de transmission, à un autre canal de transmission d'informations.